# EUROPÄISCHE PATENTANMELDUNG

(11) **EP 1 627 724 A2**
(43) Veröffentlichungstag der Anmeldung: **22.02.2006**
(21) Anmeldenummer: 05017371.5
(22) Anmeldetag: 10.08.2005
(51) Int. Cl.: B29C 47/90, B29C 47/92

(54) **Verfahren und Vorrichtung zur Herstellung von Kunststoffrohren in einer Extrusionslinie**

(30) Priorität: 13.08.2004 DE 102004039316
(71) Anmelder: INOEX GmbH, 32547 Bad Oeynhausen (DE)
(72) Erfinder: Schmuhl, Jörg Dr., 15711 Königs Wusterhausen (DE); Klose, Reinhard, 31737 Rinteln (DE)
(74) Vertreter: Seewald, Jürgen

(57) **Zusammenfassung**

Die Erfindung betrifft ein Verfahren und eine Vorrichtung zur Herstellung von Kunststoffrohren in einer Extrusionslinie, bestehend aus einer Extrudereinheit (1), einem Rohrkopf (4) mit einem Austrittsspalt (12) für die Kunststoffmasse, einer zum Dimensionswechsel im laufenden Betrieb im Durchmesser verstellbaren Kalibrierhülse (10) und einer zwischen Rohrkopf (4) und Kalibrierhülse (10) angeordneten Vakuumkammer (13), in der ein extrudiertes Rohr (6) im Wesentlichen auf den jeweils in der Kalibrierhülse (10) eingestellten Durchmesser aufweitbar ist, sowie einer Abzugseinheit (7) zum Abziehen des Rohr-Halbzeugs (6). Die Einstellung der Wanddicke des extrudierten Rohres (6) erfolgt in der Vakuumkammer (13) durch eine koordinierte Veränderung des Massedurchsatzes durch einen fixen Austrittsspalt (12) des Rohrkopfes (4) und/oder der Abzugsgeschwindigkeit des extrudierten Rohres (6) in der Extrusionslinie.

## Beschreibung

Die vorliegende Erfindung betrifft ein Verfahren und eine Vorrichtung zur Herstellung von Kunststoffrohren in einer Extrusionslinie gemäß dem Oberbegriff des Anspruchs 1 bzw. Anspruchs 3.

Um Kunststoffrohre mit unterschiedlichem Durchmesser und gewünschter Wandstärke herstellen zu können, ist es bis heute üblich, die gesamte Extrusionslinie für einen Dimensionswechsel still zu setzen. Anschließend müssen dann fast alle Komponenten der Extrusionslinie ausgetauscht werden. Das betrifft insbesondere den Düsensatz des Rohrkopfes, die Kalibrierhülse und die Abdichtungen von Vakuumtank und Kühleinheiten. Die dadurch verursachten Stillstandzeiten der Extrusionslinie, sowie der hohe Arbeitsaufwand beim Wechseln der einzelnen Ausrüstungsteile und die Verluste an Kunststoffmaterial sind auf der Kostenseite zu verkraften, solange mit großen Auftragslosen gearbeitet wird. Unter den heutigen Produktionsbedingungen werden die Auftragslose aber immer kleiner, so dass die oben geschilderten Umstellungen beim Dimensionswechsel den erzielbaren Gewinn stark reduzieren.

Um den oben beschriebenen Nachteil zu beseitigen, werden Extrusionslinien mit Komponenten angeboten, die einen Dimensionswechsel bei laufender Produktion ermöglichen. Zu diesen Komponenten gehören insbesondere über einen weiten Durchmesserbereich verstellbare Kalibrierhülsen, entsprechend verstellbare Dichtungen am Vakuumtank und an den Kühleinheiten sowie eine zwischen dem Rohrkopf und der Kalibrierhülse angeordnete Vakuumkammer. In dieser Vakuumkammer wird der aus dem Austrittsspalt des Rohrkopfes austretende noch plastifizierte Rohrrohling aufgrund des auf seiner Außenseite anliegenden Unterdrucks im Durchmesser aufgeweitet, wenn der benötigte Rohrdurchmesser größer ist als der Durchmesser des Austrittsspalts. Eine solche Vakuumkammer ist in EP 1 115 551 B1 beschrieben.

In der oben benannten europäischen Patentschrift ist auch ein Verfahren zur Herstellung von Kunststoffrohren unter Verwendung der oben genannten Komponenten einer Extrusionslinie zum Dimensionswechsel bei laufender Produktion offenbart. Dieses Verfahren arbeitet mit einem flexiblen Rohrkopf, dessen Austrittsspalt bei laufender Produktion verstellbar ist. Dieser Rohrkopf besitzt einen in einer Düse axial verstellbaren Dom. Sowohl die Düse als auch der Dom sind konisch ausgebildet, so dass durch axiale Verschiebung des Doms die Weite des Austrittsspalts veränderbar ist. Durch die Verstellung des Doms lässt sich die Wanddicke des extrudierten Rohrs in Abhängigkeit von dem Rohrdurchmesser einstellen.

Nachteilig an diesem bekannten Verfahren ist, dass schon vorhandene Extruder mit ihren Rohrköpfen nicht bzw. nicht ohne größeren Umbauaufwand verwendet werden können. Dadurch erhöhen sich die Investitionskosten bei einer Umstellung vorhandener Extrusionslinien auf einen Dimensionswechsel bei laufender Produktion bzw. auch die Kosten einer Neuinvestition.

Aufgabe der vorliegenden Erfindung ist es, ein gattungsgemäßes Verfahren zur Verfügung zu stellen, welches Umbauten an vorhandenen Extrudern nicht erfordert und damit die Investitionskosten senkt, und eine Vorrichtung zur Durchführung des Verfahrens anzugeben.

Diese Aufgabe wird erfindungsgemäß durch ein Verfahren gelöst, welches die Merkmale des Patentanspruchs 1 aufweist. Eine Vorrichtung zur Durchführung des Verfahrens ist im Anspruch 3 angegeben.

Das erfindungsgemäße Verfahren bzw. die erfindungsgemäße Vorrichtung arbeitet also mit einem Rohrkopf mit fixem Austrittsspalt. Dadurch können bei einer Umstellung vorhandener Extrusionslinien auf einen Dimensionswechsel bei laufendem Betrieb die vorhandenen Extruder ohne Umbauten weiterverwendet werden, bzw. bei einer Neuinvestifion reduzieren sich die Kosten für den Extruder, da ein Extruder mit verstellbaren Rohrkopf in der Anschaffung in aller Regel teuerer ist.

Bei dem erfindungsgemäßen Verfahren erfolgt die Einstellung der Wanddicke eines zu extrudierenden Rohres nicht wie üblich durch eine Verstellung des Austrittsspalts der Kunststoffmasse aus dem Rohrkopf, sondern durch eine koordinierte Veränderung des Massendurchsatzes durch einen fixen Austrittsspalt und/oder der Abzugsgeschwindigkeit des extrudierten Rohres in der Extrusionslinie. Soll z. B. ein größerer Rohrdurchmesser gefahren werden, so wird der Massedurchsatz durch den fixen Austrittsspalt erhöht, d. h. der Druck im Extruder wird erhöht, damit je Zeiteinheit mehr Kunststoffmasse durch den fixen Austrittsspalt durchfließt. Sollte die dadurch zur Verfügung gestellte Kunststoffmasse für die Produktion der gewünschten Wandstärke des Rohres nicht ausreichend sein, so wird parallel zur Druckerhöhung im Extruder die Abzugsgeschwindigkeit des extrudierten Rohres reduziert, wobei die Verringerung der Abzugsgeschwindigkeit in einer wirtschaftlichen Ausstoßleistung ihre Grenze findet. Soll die Wandstärke des Rohres bei gleichbleibendem Durchmesser reduziert werden, so kann das bei gleichbleibendem Massendurchsatz durch Erhöhung der Abzugsgeschwindigkeit geschehen. Es hat sich entgegen einer weitläufigen Meinung gezeigt, dass ein Ziehen des extrudierten Rohres in gewissen Grenzen durchaus möglich ist, ohne die Festigkeit des Rohres zu verringern bzw. ein Schrumpfen des Rohres oder eine Faltenbildung zu fördern. Gleichzeitig wird durch Erhöhung der Abzugsgeschwindigkeit der Produktionsausstoß erhöht.

Bei einer Verringerung des Rohrdurchmessers kann die Wandstärke ebenfalls wieder durch Variation des Massendurchsatzes und/oder der Abzugsgeschwindigkeit eingestellt werden.

Dem Fachmann stehen nach der Erfindung also zwei Parameter, nämlich der Massendurchsatz durch den fixen Austrittsspalt und die Abzugsgeschwindigkeit des extrudierten Rohres, zur Verfügung, um die Wanddicke des Rohres in der Vakuumkammer einzustellen. Dabei kann er in Abhängigkeit von dem herzustellenden Rohr (Durchmesser und Wandstärke) den Einsatz beider Parameter variieren. Entweder er nutzt nur den einen oder anderen Parameter, oder aber er nutzt beide Parameter gleichzeitig und anteilig.

In weiterer Ausgestaltung der Erfindung werden die bei einem Dimensionswechsel zu verstellenden Komponenten der Extrusionslinie gesteuert über den im Extruder aufgebauten Druck und/oder die Abzugsgeschwindigkeit des extrudierten Rohres in der Extrusionslinie automatisch verstellt.

Die Erfindung wird nachstehend anhand eines Ausführungsbeispiels näher erläutert. Die dazu gehörige Zeichnung zeigt eine Extrusionslinie zur Herstellung von Kunststoffrohren mit ihren Hauptkomponenten in schematischer Darstellung.

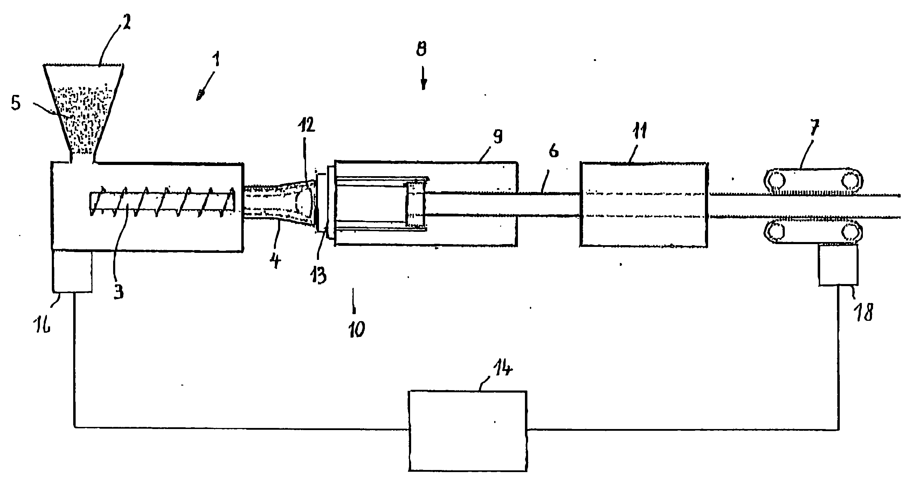

Die in der Zeichnung dargestellte Extrusionslinie umfasst eine Extrudereinheit 1 mit einem Aufgabetrichter 2, einer Extruderschnecke 3 und einem Rohrkopf 4. Über den Aufgabetrichter 2 wird ein thermoplastischer Kunststoff 5 in Granulat oder Pulverform der Extrudereinheit 1 zugeführt. In der Extrudereinheit 1 wird das Granulat bzw. Pulver erwärmt, geknetet und plastifiziert. Anschließend wird der Kunststoff als formbare Masse durch die Extruderschnecke 3 in den Rohrkopf 4 gefördert und dort durch einen ringförmigen Austrittsspalt 12 gedrückt. Dieser Austrittsspalt 12 ist fix, d. h. nicht verstellbar.

Nach dem Austritt aus dem Rohrkopf 4 wird das heiße noch verformbare Rohr 6 mittels einer am Ende der Extrusionslinie angeordneten Abzugseinheit 7 durch eine Kalibrier- und Kühleinheit 8 gezogen, die einen Vakuumtank 9 mit einer an dessen Eingang angeordneten Kalibrierhülse 10 aufweist. Die Kalibrierhülse 10 ist, wie z. B. in DE 198 43 340 C2 beschrieben, stufenlos im Durchmesser einstellbar, so dass das extrudierte, noch formbare Rohr auf den gewünschten Durchmesser fixiert werden kann. Nach dem Verlassen der Kalibrier und Kühleinheit 8 tritt das Rohr 6 in eine Kühlstrecke 11 ein, an der es auf Raumtemperatur abgekühlt wird.

Zwischen dem Rohrkopf 4 und der Kalibrierhülse 10 ist eine Vakuumkammer 13 angeordnet. In dieser Vakuumkammer 13 wird der aus dem Austrittsspalt 12 austretende, plastifizierte Rohrrohling aufgrund des auf der Außenseite des Rohres herrschenden Unterdrucks auf einen größeren Durchmesser aufgeweitet, wenn der Durchmesser des herzustellenden Rohres größer ist, als der Außendurchmesser des Austrittsspalts 12. Die Wandstärke des extrudierten Rohres 6 wird in der Vakuumkammer 13 durch Veränderung des Massedurchsatzes durch den fixen Austrittsspalt 12 und/oder der Abzugsgeschwindigkeit des extrudierten Rohres 6 in der Extrusionslinie erreicht. Zur Erhöhung bzw. zur Verringerung des Massedurchsatzes durch den fixen Austrittsspalt 12 wird der in der Extrudereinheit 1 aufgebaute Pressdruck erhöht bzw. verringert. Parallel bzw. alternativ dazu kann die Abzugsgeschwindigkeit der Abzugseinheit 7 entsprechend erhöht bzw. verringert werden. Hierzu ist vorzugsweise eine Steuereinheit 14 vorgesehen, durch die Antriebseinrichtungen 16, 18 des Extruders 1 und/oder der Abzugseinheit 7 entsprechend steuerbar sind.

Die Einstellung der anderen Komponenten der Extrusionslinie, z. B. der Kalibrierhülse 10, auf eine neue Rohrdimension bei laufender Produktion erfolgt in Abhängigkeit vom eingestellten Pressdruck in der Extrudereinheit 1 und/oder in Abhängigkeit von der Abzugsgeschwindigkeit der Abzugseinheit 7.

Die qualitativen Anforderungen an das herzustellende Rohr bestimmen die Verarbeitungsparameter Schmelztemperatur, Extruderdrehzahl und Abzugsgeschwindigkeit. Für einen festen Durchmesser des Austrittspaltes 12 des Rohrkopfes 4 ist der maximal und minimal herstellbare Rohrdurchmesser begrenzt. Um vergleichbare Ergebnisse für den Durchmesserbereich für verschiedene Materialien und unterschiedliche Werkzeugkonfigurationen zu erhalten, wurde der Parameter "Verstreckung" definiert. Dieser Parameter "Verstreckung" beschreibt in Längsrichtung das Verhältnis von Abzugs- zu Schmelzefrontgeschwindigkeit und in Querrichtung das Verhältnis der Umfangslänge der Kalibrierhülse 10 zur Umfangslänge des Austrittsspaltes 12. Versuche zeigten, dass die maximal mögliche Verstreckung bei einem Faktor von 2,5 und die minimal mögliche Verstreckung bei einem Faktor von 0,5 liegt. Der verstellbare Durchmesser der Kalibrierhülse 10 ist dann so festgelegt, dass über den gesamten Durchmesserbereich mit einem einzigen Werkzeug DIN-gerechte Rohre produziert werden können.

## Patentansprüche

1. Verfahren zur Herstellung von Kunststoffrohren in einer Extrusionslinie, bestehend aus einer Extrudereinheit (1), einem Rohrkopf (4) mit einem Austrittsspalt (12) für die Kunststoffmasse, einer zum Dimensionswechsel im laufenden Betrieb im Durchmesser verstellbaren Kalibrierhülse (10) und einer zwischen Rohrkopf (4) und Kalibrierhülse (10) angeordneten Vakuumkammer (13), in der ein extrudiertes Rohr (6) im Wesentlichen auf den jeweils in der Kalibrierhülse (10) eingestellten Durchmesser aufweitbar ist, sowie einer Abzugseinheit (7) zum Abziehen des Rohr-Halbzeugs (6), **dadurch gekennzeichnet, dass** die Einstellung der Wanddicke des extrudierten Rohres (6) in der Vakuumkammer (13) durch eine koordinierte Veränderung des Massedurchsatzes durch einen fixen Austrittsspalt (12) des Rohrkopfes (4) und/oder der Abzugsgeschwindigkeit des extrudierten Rohres (6) in der Extrusionslinie erfolgt.

2. Verfahren nach Anspruch 1, **dadurch gekennzeichnet, dass** die bei einem Dimensionswechsel zu verstellenden Komponenten der Extrusionslinie, gesteuert über den in der Extrudereinheit (1) eingestellten Pressdruck und/oder über die Abzugsgeschwindigkeit der Abzugseinheit (7) automatisch verstellt werden.

3. Vorrichtung zur Durchführung des Verfahrens nach Anspruch 1 oder 2, mit einer Extrudereinheit (1), einem Rohrkopf (4) mit einem Austrittsspalt (12) für Kunststoffmasse, einer verstellbaren Kalibrierhülse (10) zum Druckmesser-Dimensionswechsel im laufenden Betrieb und einer zwischen Rohrkopf (4) und Kalibrierhülse (10) angeordneten Vakuumkammer (13), in der ein extrudiertes Rohr (6) im Wesentlichen auf den jeweils in der Kalibrierhülse (10) eingestellten Durchmesser aufweitbar ist, sowie einer Abzugseinheit (7) zum Abziehen des Rohr-Halbzeugs (6), **dadurch gekennzeichnet, dass** eine Steuereinheit (14) zur Steuerung von Antriebseinrichtungen (16, 19) des Extruders (1) und der Abzugseinheit (7) vorgesehen ist, durch die die Extruderdrehzahl zur Einstellung des Massedrucks bzw. des Pressdrucks des Extruders und/oder die Abzugsgeschwindigkeit der Abzugseinheit (7) so einstellbar sind, dass über einen durch die Vakuumkammer (13), den Austrittsspalt (12) und die Kalibrierhülse (10) vorgebbaren Durchmesser- und Wandstärkenbereich Rohre mit definierter Wandstärke und definiertem Außendurchmesser herstellbar sind.
